Europäisches Patentamt

European Patent Office

Office européen des brevets

(19)

(11) Veröffentlichungsnummer: **0 268 769**
**B1**

(12)

# EUROPÄISCHE PATENTSCHRIFT

(45) Veröffentlichungstag der Patentschrift:
13.06.90

(51) Int. Cl.⁵: **F16C 13/00**

(21) Anmeldenummer: 87113519.0

(22) Anmeldetag: 16.09.87

(54) **Walze für die Druckbehandlung von Warenbahnen.**

(30) Priorität: 14.11.86 DE 3639009

(43) Veröffentlichungstag der Anmeldung:
01.06.88 Patentblatt 88/22

(45) Bekanntmachung des Hinweises auf die Patenterteilung:
13.06.90 Patentblatt 90/24

(84) Benannte Vertragsstaaten:
CH GB IT LI SE

(56) Entgegenhaltungen:
GB-A- 1 133 944
GB-A- 1 194 205
GB-A- 2 136 091
US-A- 3 373 633

(73) Patentinhaber: Eduard Küsters Maschinenfabrik GmbH
& Co. KG, Gladbacher Strasse 457, D-4150 Krefeld 1(DE)

(72) Erfinder: Brendel, Bernhard, Dr., Grasheider Strasse 31,
D-4155 Grefrath 2-Mülhausen(DE)

(74) Vertreter: Patentanwälte Dipl.-Ing. Walter Kuborn
Dipl.-Phys. Dr. Peter Palgen, Mulvanystrasse 2,
D-4000 Düsseldorf(DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung bezieht sich auf eine Walze der dem Oberbegriff des Anspruchs 1 entsprechenden Art.

Eine hydraulisch innenabgestützte Walze mit feststehendem Querhaupt und umlaufender Hohlwalze ist ein schwingungsfähiges System mit einer ganzen Anzahl von Freiheitsgraden. Als Einflußfaktor kommt in einer Naßpresse auch noch der elastische Filz hinzu. Bei den üblichen Abmessungen solcher Walzen, d.h. Walzenlängen von 4 m bis 10 m und Walzendurchmessern von 40 cm bis 100 cm liegen die Eigenfrequenzen etwa im Bereich von 80 Hz. In der Naßpresse führen die Schwingungen unter Umständen zu einem ungleichmäßigen Verfestigungsmuster im Filz und dementsprechend zu einem ungleichmäßigen Muster der Entwässerungswirkung. Die damit behandelten Papierbahnen weisen über ihre Oberfläche mustermäßig lokal unterschiedliche Feuchtigkeitsgehalte auf. Besonders unangenehme Wirkungen erzeugen Trampelschwingungen und Winkelschwingungen der Walze auf den Filz, d.h. Schwingungen in der Querebene, deren Schwingungsmittelpunkt im Bereich der Bahnmitte bzw. der Bahnränder liegen.

Wenn die Schwingungen systematisch erfolgen, d.h. z.B. eine Stelle der Filzbahn bei jedem Durchlauf immer wieder einer stärkeren Kompression als andere Stellen ausgesetzt wird, verstärkt sich die Musterbildung in der Filzbahn natürlich mit der Zeit. Um dies zu verhindern, bestand eine Abhilfe bisher darin, die Filzbahn zu verspannen, um zu verhindern, daß Fehlstellen im Filz rhythmisch in den Walzspalt kommen und einerseits wieder neue Schwingungen anregen können, andererseits in ihrer Abweichung von den benachbarten Bereichen noch verstärkt werden.

Bei den hydraulisch innenabgestützten Walzen, also Walzen mit einer umlaufenden Hohlwalze und einem feststehenden Querhaupt, an welchem eine gegen den Innenumfang der Hohlwalze wirkende hydraulische Stützeinrichtung angreift, spielen die Biegeeigenschwingungen der Hohlwalze und des Querhaupts die wesentliche Rolle.

Es gibt aber auch Fälle, in denen die Biegeeigenschwingungen nicht im Vordergrund stehen, sondern es sich in erster Linie um Verlagerungen der Walze im Ganzen quer zu ihrer Achse handelt. Ein Beispiel hierfür ist das sogenannte Barring in Kalander, welches durch Fortpflanzung von Stößen durch den Walzenstapel hindurch entsteht, wenn die Walzen gleichen Durchmesser bzw. in einem bestimmten Verhältnis zueinander stehende Durchmesser aufweisen. Das Barring führt zu Querstreifen im behandelten Papier. Es wurde bisher durch unterschiedliche Walzendurchmesser, durch seitliches Versetzen der Walzen und durch äußere Umlenkwalzen bekämpft, was alles dazu dienen sollte, daß nicht Schwingungsberge bzw. Schwingungstäler gleichzeitig in allen Walzspalten vorhanden sind. Das Barring ist eine Schwingungserscheinung, die nicht auf durchbiegungsgesteuerte Walzen mit feststehendem Querhaupt und umlaufender Hohlwalze beschränkt ist, sondern auch und gerade an konventionellen, d.h. massiven Walzen auftritt.

Eine Walze nach dem Oberbegriff des Anspruchs 1 ist aus der DE-C 1 561 706 bekannt. Es handelt sich um eine Kalanderwalze für Papierbahnen, die aus einer umlaufenden Hohlwalze sowie einem diese der Länge nach durchgreifenden feststehenden Querhaupt besteht. Die Enden des Querhaupts stehen aus der Hohlwalze vor und bilden die Walzenzapfen. In dem Querhaupt sind einander in der Wirkebene der Walze gegenüberliegende stegkolbenartige Druckschuhe vorgesehen, die sich in zylinderartigen Nuten radial verlagern können, gegen den Innenumfang der Hohlwalze anliegen und sich im wesentlichen über die Arbeitsländer der Walze erstrecken. Die Nuten können unterhalb der Druckschuhe mit Druckflüssigkeit gefüllt werden, wodurch die Druckschuhe mit einem vorbestimmten Druck gegen den Innenumfang der Hohlwalze angepreßt werden und einen weitgehend gleichmäßigen Liniendruckerzeugen, der, da die Drücke in den einander gegenüberliegenden Nuten in entgegengesetzten Richtungen wirken, im wesentlichen von der Differenz dieser Drücke abhängt.

Die in der Wirkebene, d.h. in der Ebene der Resultierenden der von der Walze ausgeübten Kräfte, einander gegenüberliegenden Zylinderräume unter den Druckschuhen sind bei der aus der DE-C 1 561 706 bekannten Ausführungsform durch feine radial durch das Querhaupt hindurchgehende Kanäle miteinander verbunden, von denen mehrere dicht nebeneinander angeordnet sind. Die Kanäle schneiden eine Längsbohrung, in der ein abdichtender Kolben verschiebbar ist. Je nachdem wie weit der Kolben vorgeschoben wird, werden einer oder mehrere der Kanäle von dem Kolben geschlossen.

Durch die Kanäle kann die Druckflüssigkeit entsprechend dem Druckunterschied von einer Nut in die andere übertreten und erfährt dabei in den feinen Kanälen eine Drosselung, die von der Zahl der von dem Kolben freigegebene Kanäle abhängt. Durch diesen Drosseleffekt soll sich beim Auftreten von Schwingungen eine Dämpfungswirkung ergeben, deren Intensität durch Öffnen von mehr oder weniger der Kanäle verändert werden kann.

Tatsächlich ist jedoch die auf diese Weise erzielbare Dämpfungswirkung gering. Die in der Praxis auftretenden Verlagerungen der Hohlwalze gegenüber dem Querhaupt liegen im My-Bereich, und entsprechend gering sind die gegebenenfalls übertretenden Flüssigkeitsmengen. Ein nennenswerter Drosseleffekt und damit eine merkliche Dämpfung können nicht erwartet werden.

Bei der DE-A 3 306 838 sind bereits Einzelheiten des Schwingungsverhaltens angesprochen. Es wird versucht, an einer durchbiegungsgesteuerten Walze des gesamten Schwingungszustandes Herr zu werden, indem im Bereich der größten Biegungsschwingungsamplitude durch ein von dem Ringraum zwischen der Hohlwalze und dem Querhaupt abgesperrtes Flüssigkeitspolster ein Dämpfungselement geschaffen wird. Das Flüssigkeitspolster wird durch einen am Walzenmantel anliegenden und relativ zum Joch beweglichen Kolben gebildet, der eine das Flüssigkeitspolster enthaltende Flüssigkeitskammer vom Ringraum abtrennt.

Auch bei dieser Ausführungsform ist die erzielbare Dämpfungswirkung funktionsbedingt, d.h. wegen der Herbeiführung der Dämpfung über Flüssigkeitsströmungen, begrenzt und ergibt sich insbesondere der Nachteil, daß gerade in dem die Elemente zur Liniendruckbildung enthaltenden und insoweit "aktiven" Bereich der Walze wertvoller Raum für die Anbringung von kolbenartigen hydraulischen Elementen zur Schaffung der Flüssigkeitspolster zur Beeinflussung der Biegelinie verlorengeht und der Biegewiderstand der Querhaupts geschwächt wird.

Aus der GB 1 133 944 B ist ein Kalander bekannt, bei dem an der Unterwalze eine Rollbending-Einrichtung vorgesehen ist, die an den über die Walzenlagerung vorstehenden Walzenzapfen angreifende, in radialer Richtung wirkende mit dem Fundament verbundene Kolbenzylindereinheiten umfaßt, die auf die Unterwalze ein Biegemoment zur Beeinflussung des Linienkraftverlaufs ausüben. Zweck dieser Einrichtung ist allein die Linienkraftbeeinflussung, wenn sich tatsächlich auch eine Dämpfung von Biegeschwingungen ergeben mag, die allerdings die gegebene konstruktive Ausgestaltung mit den am Fundament befestigten Kolben/Zylindereinheiten voraussetzt.

Der Erfindung liegt die Aufgabe zugrunde, eine wirkungsvolle Einrichtung zur Dämpfung der Schwingungen zu schaffen, die keine konstruktive Beschränkungen der Elemente zur Erzielung des Liniendrucks bzw. der Walzvorrichtung, in der die Walze eingesetzt wird, mit sich bringt.

Diese Aufgabe wird durch die in Anspruch 1 wiedergegebene Erfindung gelöst.

Der hinsichtlich der Liniendruckerzeugung "aktive" Bereich der Walze bleibt auf diese Weise von Dämpfungseinrichtungen frei, die statt dessen an eine andere Stelle, nämlich an den "passiven" Bereich am Ende der Walzenzapfen, verlegt worden sind, wo meist auch genügen Platz vorhanden ist und weniger konstruktive Einschränkungen bestehen. Der "Walzenzapfen" ist bei dem bevorzugten Anwendungsfall der hydraulisch innenabgestützten Walze das aus der Hohlwalze hervorstehende Ende des undrehbaren Querhaupts, bei dem nicht ausgeschlossenen Fall der konventionellen Walze der mit dem Walzenkörper einstückigen oder fest verbundene tatsächliche, mitdrehende Walzenzapfen. Der Walzenzapfen dient in einem der Hohlwalze bzw. dem Walzenkörper benachbarten Stützbereich der Abstützung der Walze in einem Maschinengestell. Der Angriffsbereich der Dämpfungseinrichtung liegt außen, also außerhalb des Stützbereichs. Dadurch kann die Dämpfungseinrichtung außerhalb des Maschinengestells angeordnet werden, wo sie am wenigsten stört, aber gleichzeitig wegen des großen Abstandes von der Mitte bei Biegeschwingungen besonders wirksam ist, weil die Amplitude der Auslenkungen außen groß ist. Die Ausbildung der Dämpfungseinrichtung als in sich geschlossene Baueinheit ermöglicht die Montage nach dem Einsetzen der Walze in das Maschinengestell auf einfache Weise und auch an bereits bestehenden Walzeinrichtungen.

Im einzelnen kann die Ausgestaltung nach Anspruch 2 vorgenommen sein, wobei das Merkmal der Spielfreiheit für die Weiterleitung der Schwingungen auf die träge Masse maßgebend ist.

Überraschenderweise hat sich gezeigt, daß eine Reibungsdämpfungseinrichtung (Anspruch 3) bei den geringen Amplituden eine bessere Wirkung ergibt als eine hydraulische, auf einem Drosseleffekt beruhende Einrichtung.

In den bevorzugten Ausführungsformen gemäß Anspruch 4 arbeitet die Reibungsdämpfungseinrichtung nicht gegen ein feststehendes Widerlager, sondern umfaßt eine träge Masse. Dadurch verbleibt die Walze ein in sich geschlossenes gedämpftes System.

Die träge Masse ist vorzugsweise als das Ende des Walzendampfens umgebender Massenring (Anspruch 5) ausgebildet, der normalerweise in der in Anspruch 6 wiedergegebene Weise "in der Mitte" gehalten wird und bei dem die Reibungselemente zweckmäßig an mindestens einer axialen Stirnseite (Anspruch 7) und in einem mit ihm eine bauliche Einheit bildenen Gehäuse (Anspuch 8) angeordnet sind, wodurch die Dämpfungseinrichtung als Ganze auf das Ende des Walzenzapfens aufgeschoben und dort befestigt und natürlich auch wieder entfernt werden kann.

Die Reibungswirkung kann konkret in der in Anspruch 9 wiedergegebenen Weise erzeugt werden.

Eine bevorzugte praktische Ausführungsform einer solchen Dämpfungseinrichtung ist Gegenstand des Anspruchs 10. Das Maß der Reibung wird durch entsprechende Betätigung der Kraftausübungseinrichtung bestimmt.

Eine vorteilhafte Ausgestaltung des Gedankens der Erfindung ist Gegenstand des Anspruchs 11. Hierdurch ist es möglich, die Wirksamkeit der Dämpfungseinrichtung anzupassen. Läuft die Walze ruhig, braucht die Dämpfungseinrichtung nicht in Aktion zu treten. Sind Schwingungen angeregt, kann ihr Einfluß je nach deren Amplituden bedarfsweise eingestellt werden.

Wenn gemäß Anspruch 12 die Kraftausübungseinrichtung durch ein fluides Medium betätigbar ist, erfolgt ihre Einstellung über den Druck des fluiden Mediums.

Durch die Sensoreinrichtung nach Anspruch 13 kann die Anpassung der Dämpfungswirkung an den Schwingungszustand selbsttätig gestaltet werden.

Eine konkrete Ausführungsform der Kraftausübungseinrichtung ist in Anspruch 14 wiedergegeben. Der Schlauchring wird wie ein Fahrradschlauch hydraulisch oder pneumatisch aufgeblasen und drückt die Massenringe mit wählbarer Kraft gegen die Reibungselemente.

In der Zeichnung sind Ausführungsbeispiele der Erfindung dargestellt.

Fig. 1 bis 5 geben schematisch Anwendungsfälle wieder, Fig. 6 und 7 ein Ausführungsbeispiel einer Dämpfungseinrichtung im einzelnen.

Fig. 1 zeigt eine Ansicht eines Endes einer sogenannten Schwimmenden Walze mit der erfindungsgemäßen Dämpfungseinrichtung;

Fig. 2 zeigt einen Querschnitt nach der Linie II-II in Fig. 1 mit angedeuteter Gegenwalze;

Fig. 3 zeigt ein Ende einer durch einzelne Stützelemente hydraulisch innenabgestützten Walze, die einen sogenannten inneren Hub ausführen kann;

Fig. 4 zeigt einen Querschnitt nach der Linie IV-IV;

Fig. 5 zeigt eine Ansicht einer konventionellen Walze;

Fig. 6 zeigt einen Längsschnitt durch eine auf das Ende eines Walzenzapfens aufgebrachte Dämpfungseinrichtung;

Fig. 7 zeigt eine Ansicht einer Arretierungsscheibe.

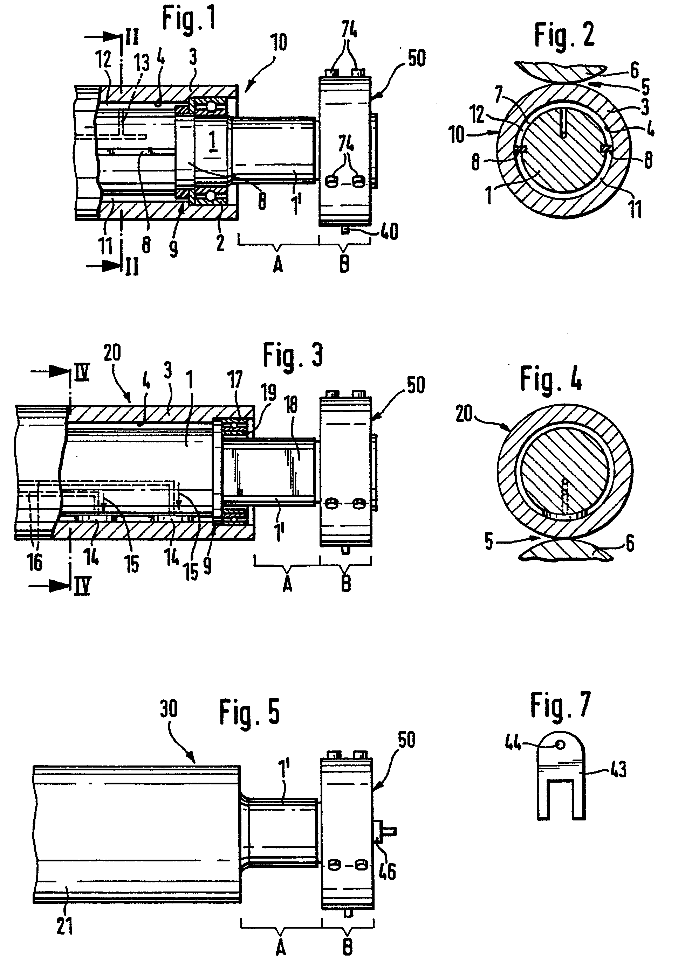

Die in Fig. 1 als Ganzes mit 10 bezeichnete Walze umfaßt ein feststehendes Querhaupt 1 und eine um dieses umlaufende Hohlwalze 3, deren Innenumfang 4 allseitigen Abstand vom Außenumfang des Querhauptes 1 beläßt und die auf in der Nähe der Enden angebrachten Lagern 2 auf dem Querhaupt 1 abgestützt ist. Die Enden des Querhauptes 1 stehen aus der Hohlwalze 3 vor und bilden die Walzenzapfen 1', an denen Kräfte auf die Walze 10 aufgebracht werden können. Die Walzenzapfen 1' umfassen einen der Hohlwalze 3 benachbarten Stützbereich A, in welchem die Abstützung in einem Maschinengestell bzw. Walzenständer stattfindet, und einen Bereich B, in welchem eine als Ganzes mit 50 bezeichnete Dampfungseinrichtung auf dem äußeren Teil des Endes des Walzenzapfens 1' angebracht ist.

Eine Gegenwalze 6 liegt in dem gezeigten Ausführungsbeispiel von oben an der Walze 10 an und bildet an deren Oberseite den Walzspalt 5.

Der zwischen dem Innenumfang 4 der Hohlwalze 3 und dem Querhaupt 1 zwischen den Lagern 2 gebildete Zwischenraum ist durch zu beiden Seiten des Querhaupts 1 etwa in dessen halber Höhe, also an der breitesten Stelle, angebrachte Längsdichtungen 8, die am Innenumfang 4 der Hohlwalze anliegen, sowie innenseitig der Lager 2 diesen benachbart angeordnete Endquerdichtungen 9 in eine auf der Seite des Walzspalts 5 gelegene, im wesentlichen geschlossene Längskammer 12 sowie eine dem Walzspalt 5 abgelegene, im wesentlichen geschlossene Längskammer 11 unterteilt. In die Längskammer 12 führt eine Zuleitung 13, mittels deren Druckflüssigkeit in die Längskammer 12 eingeleitet werden kann. Diese Druckflüssigkeit stützt sich einerseits gegen den Innenumfang 4 der Hohlwalze 3, andererseits gegen die dieser zugewandte Oberfläche 7 des Querhaupts 1 ab. Das Querhaupt 1 kann sich durch den allseits vorhandenen Abstand zum Innenumfang der Hohlwalze 3 unter der Wirkung des zur Bildung des Liniendrucks benötigten Drucks in der Kammer 12 durchbiegen, ohne daß die Hohlwalze 3 davon betroffen ist. Auch kann, weil die Hohlwalze 3 über die Lager 2 auf dem Querhaupt 1 abgestützt ist, eine bewußte Durchbiegung der Hohlwalze 3 herbeigeführt werden.

Durch im Betrieb auftretende Kräfte veranlaßt, kann es zu Biegeschwingungen des Querhaupts 1 in der Wirkebene, d.h. in der durch die Achsen der Hohlwalze 3 und der Gegenwalze 6 gehenden Ebene kommen, deren Schwingungsmittelpunkte nicht an den Enden, sondern irgendwo im Inneren der Längenerstreckung des Querhaupts 1 gelegen sind. Die Endbereiche B führen bei solchen Schwingungen Auslenkungen mit einer gewissen Amplitude durch, die in der Dämpfungseinrichtung 50 eine Dämpfung erfahren.

Soweit in den weiteren Figuren Teile mit gleicher Funktion vorkommen, sind gleiche Bezugszeichen verwendet.

In der Ausführungsform der Fig. 3 und 4 ist eine hydraulisch innenabgestützte Walze 20 dargestellt, die wiederum ein undrehbares Querhaupt 1 umfaßt, um welches eine Hohlwalze 3 drehbar ist. Die Abstützung der Hohlwalze 3 gegenüber dem Querhaupt 1 erfolgt hierbei nicht durch in einer über die Länge der Walze durchgehenden Längskammer befindliche Druckflüssigkeit, sondern mittels einzelner längs der Walze auf der Seite des Walzspalts 5, der in dem Ausführungsbeispiel der Fig. 3 und 4 unten liegt, aufgereihter Stütz elemente 14, die nach Art eines Kolbens in in dem Querhaupt 1 angebrachten Bohrungen geführt und unter einem hydraulischen Druck im Sinne der Pfeile 15 gegen den Innenumfang 4 der Hohlwalze 3 angedrückt sind. Die Stützelemente 14 werden über die Leitungen 16 im Innern des Querhauptes 1 mit Druckflüssigkeit versorgt. An den Enden der Hohlwalze 3 sind zwar auch hier Lager 17 vorhanden, doch haben diese im Gegensatz zu den Lagern 2 der Fig. 1 nicht die Funktion, Kräfte in der Wirkebene zu übertragen, sondern lediglich die Funktion, die Hohlwalze 3 an dem Querhaupt 1 senkrecht zur Wirkebene zu führen. Die Enden des Querhauptes 1 sind an den Seiten bei 18 abgeflacht, und es sitzt auf den Enden ein Ring 19 mit einer entsprechenden Ausnehmung, der also in der Wirkebene gegenüber den Enden verschiebbar, ansonsten aber auf den Enden an den Abflachungen 18 undrehbar geführt ist. Die Lager 17 sind auf den Ringen 19 angeordnet. Die Hohlwalze 3 kann sich also als Ganzes gegenüber dem Querhaupt 1 in einem gewissen Bereich in der Wirkebene verlagern.

Auch hier umfaßt das Ende des Querhauptes 1 einen Stützbereich A, in welchem die Lagerung in einem Maschinengestell erfolgt, sowie einen außen daran anschließenden Bereich B, in welchem die Dämpfungseinrichtung 50 auf dem Ende angeordnet ist.

Die Walze 30 nach Fig. 5 ist eine massive Walze konventioneller Art mit einem Walzenkörper 21, der aus einem massiven Guß- oder Schmiedestück besteht und in dem Bereich A zur Lagerung in einem Maschinengestell im Durchmesser abgesetzt ist. In dem außen anschließenden Bereich B ist die Dämpfungseinrichtung 50 angeordnet.

Bei allen drei Ausführungsformen 10, 20, 30 bildet das vorstehende Ende 1' den Walzenzapfen, der die Dämpfungseinrichtung 50 trägt. Es versteht sich, daß die Merkmale der Walzen 10,20 auch vertauscht werden können: Die Schwimmende Walze 10 braucht keine Lager 2 aufzuweisen, und es können in der Walze 20 mit den Stützelementen 14 Lager vorhanden sein, über die die Hohlwalze 3 unmittelbar auf dem Querhaupt abgestützt ist. Ebenso versteht es sich, daß die Walzen 10, 20,30 im allgemeinen an beiden Enden gleich ausgebildet sind.

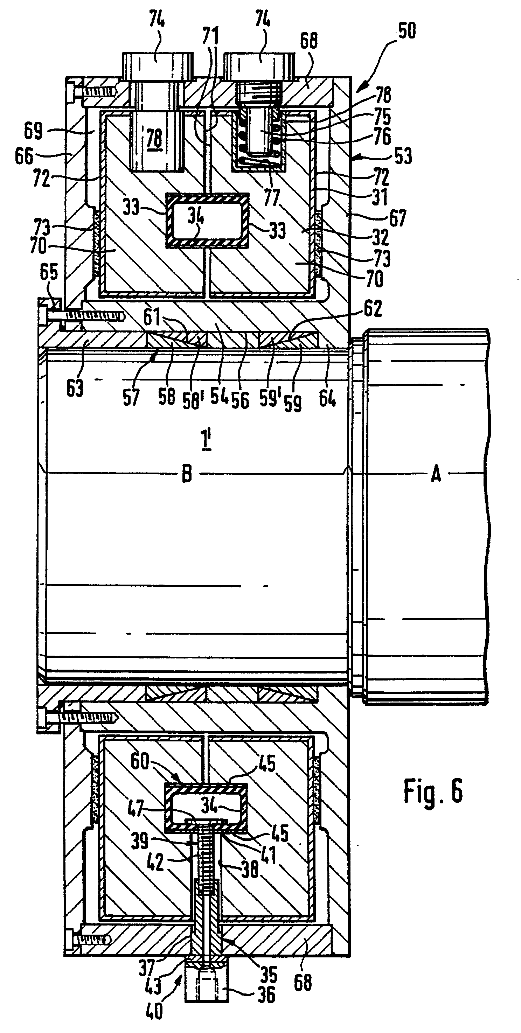

In den Fig. 6 und 7 ist die Konstruktion der Dämp-

fungseinrichtung 50 im einzelnen erkennbar. Sie ist auf dem äussersten Bereich B des Walzenzapfens 1' angeordnet, der in einer der in den Fig. 1 bis 5 beschriebenen Weisen ausgebildet sein kann.

Die Dämpfungseinrichtung 50 umfaßt ein ringförmiges Gehäuse 53, welches eine zylindrische Innenwandung 54 mit einer zylindrischen, den Außenumfang des Bereichs B des Walzenzapfens 1' mit Abstand umgebenden Innenumfangsfläche 56 aufweist. In dem Abstandsraum ist eine Konusspannanordnung 57 mit Ringpaaren 58,58' bzw. 59,59' vorgesehen. Die Ringpaare 58,58' bzw. 59,59' liegen über Konusflächen 61 bzw. 62 aneinander an. Eine auf den Konusring 58 durch den in den Abstandsraum eingreifenden Flanschring 63 ausgeübte Axialkraft wird durch die Konusspannanordnung 57, die sich an einem Bund 64 an dem in Fig. 6 rechten Ende gegen diese Axialkraft abstützt, in eine radiale Klemmkraft umgesetzt, mittels deren das Gehäuse 53 an seiner Innenwandung 54 kraftschlüssig auf dem Teil B des Walzenzapfens 1' festgesetzt werden kann. Die Axialkraft des Flanschrings 13 wird durch in die Bohrungen 65 in dessen Flansch eingeschraubte, über den Umfang verteilte, in die Innenwandung 54 eingreifende axiale Spannschrauben erzeugt.

An den axialen Enden der ringförmigen Innenwandung 54 sind kreisringförmige radiale Wandungen 66,67 mit der Innenwandung 54 verbunden, die an ihrem radial äußeren Rand durch eine zylinderförmige äußere Wandung 68 überbrückt sind.

Der ringförmige Innenraum 69 des Gehäuses 53 wird von zwei untereinander gleichen Massenringen 70 im wesentlichen ausgefüllt, die mit ihren einen, parallel zu einer Radialebene verlaufenden axialen Stirnseiten 71 einander mit geringem Abstand gegenüberstehen und mit den anderen axialen Stirnseiten 72 gegen Reibungselemente 73 anliegen, die in einer ringförmigen Zone an den einander zugewandten Innenseiten der radialen Wandungen 66,67 befestigt sind. Statt dessen könnten die Reibungselemente 73 auch an den Massenringen 70 befestigt sein.

Die Massenringe 70 bestehen in dem Ausführungsbeispiel aus Mantelringen 31 aus starkem Blech, die in einer durch die Ringachse gehenden Schnittebene einen U-förmigen Querschnitt aufweisen und mit den offenen Seiten des "U" gegeneinandergesetzt sind. Zur Erzielung einer großen Dämpfungsmasse sind die Mantelringe 31 mit Blei 32 oder einem ähnlichem schweren Material ausgegossen.

Die Massenringe 70 können sich in dem Innern 69 des Gehäuses 53 radial in einem gewissen Bereich bewegen, der durch den radialen Abstand der Umfangsflächen der Massenringe von den Wandungen 54 und 68 bestimmt ist. Im Normalfall werden die Massenringe 20 durch Halteelemente 74 in einer mittleren, zur Achse des Walzenzapfens 1' koaxialen Lage elastisch festgehalten. Die Halteelemente 74 sind über den Umfang der Massenringe 70 gleichmäßig verteilt. In dem Ausführungsbeispiel sind pro Massenring 70 drei um 120° gegeneinander versetzte Halteelemente 74 vorgesehen. Die Halteelemente 74 sind als Schrauben ausgebildet, die von außen in die Wandung 68 eingeschraubt sind.

Der Gewindeteil der Halteelemente 74 setzt sich in einen Zapfen 75 fort, der von einer Feder 76 umgeben ist, die sich gegen den Boden 77 einer in den Umfang der Massenringe 70 eingelassenen Büchse 78 setzt. Auf diese Weise werden die Massenringe 70 in allseitigem radialem Abstand von den Gehäusewandungen 54 und 68 gehalten und können gegen Federkraft ein wenig radial ausgelenkt werden.

In den einander zugewandten Stirnseiten 71 der Massenringe 70 sind konzentrisch zur Achse des Walzenzapfens 1' umlaufende Nuten 33 von in dem Ausführungsbeispiel rechteckigem Querschnitt vorgesehen, in denen ein umlaufender Schlauchring 34 angeordnet ist, der den Gesamtquerschnitt der beiden Nuten 33,33 im wesentlichen ausfüllt.

An einer Stelle des Umfangs ist eine in Fig. 6 als Ganzes mit 40 bezeichnete Zuleitung vorgesehen, ähnlich wie das Ventil bei einem Fahrradschlauch. Die Zuleitung umfaßt eine mit einer Innenbohrung versehene Hülse 35, die außen ein im Durchmesser vergrößertes Kopfstück 36 für den Anschluß einer Druckmittelleitung sowie einen zylindrischen Teil 37 umfaßt, der in eine radiale Bohrung der Wandung 68 eingeführt ist. Der radial nach innen anschließende Teil der Hülse 35 greift mit seitlichem Spiel in eine radiale Bohrung 38 der beiden Massenringe 70 ein, deren Achse in der radialen Trennebene der beiden Massenringe 70 liegt, so daß in jedem Massenring 70 eine etwa halbzylindrische Ausnehmung vorgesehen ist. In das Ende der Hülse 35 ist eine Flanschhülse 39 eingeschraubt, die einen flanschartigen Kopf 47 aufweist, der im Innern des Schlauchrings 34 angeordnet ist. Der Gewindeschaft 42 der Flanschhülse 39 durchgreift den Schlauchring 34 nach aussen. Von außen ist eine Gewindescheibe 41 gegen den Schlauchring 34 angeschraubt, so daß die Flanschhülse 39 druckdicht mit dem Schlauchring 34 verbunden ist. Durch die Bohrungen der Hülse 35 und der Flanschhülse 39 ist eine Verbindung von dem Anschlußkopf 36 zum Innern des Schlauchrings 34 hergestellt.

Das radiale Spiel der Hülse 35 und des Flanschrings 39 zur Bohrung 38 besteht, damit durch die Zuleitung 40, die ja in der äußeren Wandung 68 festsitzt, keine Behinderung der Beweglichkeit der Massenringe 70 eintritt.

Zwischen dem zylindrischen Teil 37 und dem Anschlußkopf 36 ist die Hülse 35 beidseitig abgeflacht, so daß ein gabelförmiges Befestigungsstück 43 aufschiebbar ist, welches eine durch eine außerhalb des Umfangs des Anschlußkopfes 36 gelegene Bohrung 44 in die Außenseite der Wandung 68 eingeschraubte Schraube an der Außenseite der Wandung 68 festlegbar ist. Das Befestigungsstück 43 hält die Büchse 35 in beiden Achsrichtungen und gegen Verdrehung fest. Wenn durch die Zuleitung 40 Druckflüssigkeit oder Druckluft in das Innere des Schlauchrings 34 eingeleitet wird, werden die Massenringe 70 wegen der elastischen Nachgiebigkeit des Schlauchrings 34 axial auseinander und gegen die Reibungselemente 73 gedrückt.

Damit der aus elastischem Material wie zum Beispiel Gummi bestehende Schlauchring 34 an den rauhen Wandungen der Nuten 33 bei dem Arbeiten der Massenringe 70 gegeneinander keinen Schaden nimmt, sind an den radial inneren und äußeren Flanken der Nuten 33 ringförmige Zwischenlagen 45 aus Kunststoff, zum Beispiel Polytetrafluoräthylen, vorgesehen.

Die Zuleitung 40 in der in Fig. 6 wiedergegebenen Ausbildung ist nur für die Anwendung an einem undrehbaren Walzenzapfen 1' geeignet. Wenn die Dämpfungseinrichtung 50 an einer konventionellen Walze vorgesehen ist und mitumläuft, ist eine geeignete Drehzuführung für das fluide Druckmittel für den Schlauchring 34 vorzusehen, wie es in Fig. 5 bei 46 angedeutet ist.

Wenn es zu einer Schwingung in der Walze 10,20,30 kommt, die mit einer radialen Verlagerung des Walzenzapfens 1' einhergeht, wird das auf den Walzenzapfen 1' durch die Konusspannverbindung 57 spielfrei aufgeklemmte Gehäuse 53 mitgenommen und erfolgt eine radiale Verlagerung desselben gegenüber den eine träge Masse bildenden Massenringen 70,70, die zu einer Reibung an den Reibungselementen 73 und einer entsprechenden Dämpfung führt. Die Reibung und damit die Dämpfung können durch entsprechende Druckgabe in dem Schlauchring 34 den Erfordernissen angepaßt werden.

## Patentansprüche

1. Walze (10) für die Druckbehandlung von Warenbahnen, insbesondere hydraulisch innenabgestützte Walze für den Einsatz in der Naßpartie einer Papiermaschine, mit einer Einrichtung zur Dämpfung beim Umlauf der Walze entstehender Biegungsschwingung derselben, dadurch gekennzeichnet, daß die Dämpfungseinrichtung (50) als in sich geschlossene Baueinheit an dem nach außen überstehenden Teil (B) des Walzenzapfens (1') (mit dem Walzenkörper einstückiger oder fest verbundener tatsächlicher mitdrehender Walzenzapfen oder aus der Hohlwalze einer hydraulisch innenabgestützten Walze hervorstehendes Ende des undrehbaren Querhaupts) befestigt ist.

2. Walze nach Anspruch 1, dadurch gekennzeichnet, daß die Dämpfungseinrichtung (50) eine Öffnung (56) aufweist, mit der sie auf den überstehenden Teil (B) des Walzenzapfens (1') in Achsrichtung aufschiebbar und dort frei von radialem Spiel festlegbar ist.

3. Walze nach Anspruch 1 oder 2, dadurch gekennzeichnet, daß die Dämpfungseinrichtung (50) eine Reibungsdämpfungseinrichtung ist.

4. Walze nach Anspruch 3, dadurch gekennzeichnet, daß die Reibungsdämpfungseinrichtung eine gegenüber dem Teil (B) des Walzenzapfens (1') radial bewegliche, normalerweise gegenüber dem Teil (B) des Walzenzapfens (1') in einer mittleren Lage festgehaltene träge Masse umfaßt.

5. Walze nach Anspruch 4, dadurch gekennzeichnet, daß die träge Masse durch mindestens einen den Teil (B) des Walzenzapfens (1') mit radialem Spiel umgebenden Massenring (70) gebildet ist.

6. Walze nach Anspruch 5, dadurch gekennzeichnet, daß der Massenring (70) durch über den Umfang verteilte, in radialer Richtung elastisch nachgiebige Halteelemente (74) in einer zum Walzenzapfen (1') konzentrischen Lage gehalten ist.

7. Walze nach einem der Ansprüche 4 bis 6, dadurch gekennzeichnet, daß an mindestens einer axialen Stirnseite des Massenrings (70) Reibungselemente (73) angeordnet sind.

8. Walze nach einem der Ansprüche 5 bis 7, dadurch gekennzeichnet, daß der Massenring (70) radial beweglich in einem mit dem Massenring (70) eine in sich geschlossene bauliche Einheit bildenden und als solche auf dem Teil (B) des Walzenzapfens (1') befestigbaren Gehäuse (53) angeordnet ist.

9. Walze nach Anspruch 8, dadurch gekennzeichnet, daß eine Kraftausübungseinrichtung (60) vorgesehen ist, mittels deren der Massenring (70) über die Reibungselemente (73) gegen eine benachbarte radiale Wandung (66, 67) des Gehäuses (53) andrückbar ist.

10. Walze nach Anspruch 9, dadurch gekennzeichnet, daß zwei in einer Radialebene getrennte Massenringe (70, 70) vorgesehen sind, die durch die Kraftausübungseinrichtung (60) axial auseinanderdrückbar sind und die an den beiden äußeren axialen Stirnseiten gegen Reibungselemente (73, 73) anliegen, die sich gegen die benachbarten radialen Wandungen (66, 67) des Gehäuses (53) abstützen.

11. Walze nach Anspruch 9 oder 10, dadurch gekennzeichnet, daß die Kraft der Kraftausübungseinrichtung (60) einstellbar ist.

12. Walze nach Anspruch 11, dadurch gekennzeichnet, daß die Kraftausübungseinrichtung (60) durch ein fluides Medium betätigbar und mittels einer Steuereinrichtung der Druck des fluiden Mediums einstellbar ist.

13. Walze nach Anspruch 12, dadurch gekennzeichnet, daß eine Sensoreneinrichtung für die Bestimmung der Amplitude der Schwingungen der Walze (10, 20, 30) vorgesehen ist, deren Signale in die Steuereinrichtung zwecks Steuerung der Wirkung der Dämpfungseinrichtung (50) in Abhängigkiet von den ermittelten Schwingungsamplituden gebbar sind.

14. Walze nach einem der Ansprüche 10 bis 13, dadurch gekennzeichnet, daß die Kraftausübungseinrichtung (60) in den im Bereich der Radialebene mit geringem Abstand einander gegenüberstehenden axialen Stirnseiten (71) der Massenringe (70) einander gegenüberliegende umlaufende Nuten (33) sowie einen in beide Nuten (33, 33) eingreifenden elastischen Schlauchring (34) umfaßt, der über eine Zuleitung (40) mit dem fluiden Medium füllbar ist.

## Revendications

1. Cylindre (10) pour le traitement par compression de produits en forme de nappe, notamment cylindre appuyé intérieurement de manière hydraulique, applicable à la section humide d'une machine à papier comportant une installation pour amortir les oscillations de flexion engendrées par la rotation du cylindre, caractérisé en ce que l'installation d'amortissement (50) est fixée comme unité constructive, fermée, à la partie (B) en saillie vers l'extérieur, du tourillon de cylindre (1') (le tourillon de cylindre faisant une seule pièce avec le corps du cylindre ou étant une pièce reliée solidairement à celui-ci et tournant effectivement avec celui-ci ou encore l'extrémité non rotative de la tête transversale en saillie du cylindre creux appuyé intérieurement de manière hydraulique).

2. Cylindre selon la revendication 1, caractérisé en ce que le dispositif d'amortissement (50) comporte une ouverture (56) par laquelle elle peut être emmanchée en direction axiale sur la partie en saillie (B) du tourillon de cylindre (1')) et y être fixée sans jeu radial.

3. Cylindre selon la revendication 1 ou 2, caractérisé en ce que l'installation d'amortissement (50) est une installation d'amortissement à friction.

4. Cylindre selon la revendication 3, caractérisé en ce que l'installation d'amortissement par friction comprend une masse d'inertie, mobile radialement par rapport à la partie (B) du tourillon de cylindre (1'), et qui est normalement maintenue dans une position médiane, fixe par rapport à la partie (B) du tourillon de cylindre (1').

5. Cylindre selon la revendication 4, caractérisé en ce que la masse d'inertie est formée par au moins un anneau massique (70) entourant avec du jeu radial la partie (B) du tourillon de cylindre (1').

6.. Cylindre selon la revendication 5, caractérisé en ce que l'anneau massique (70) est maintenu dans une position concentrique au tourillon de cylindre (1') par des éléments de retenue (74), élastiques souples, dans la direction radiale et qui sont répartis à la périphérie.

7. Cylindre selon l'une des revendications 4 à 6, caractérisé par des éléments de friction (73) prévus sur au moins une face frontale axiale de l'anneau massique (70).

8. Cylindre selon l'une des revendications 5 à 7, caractérisé en ce que l'anneau massique (70) est logé de manière mobile radialement dans un boîtier (53) formant une unité constructive fermée avec l'anneau massique (70) et monté en tant que telle sur la partie (B) du tourillon de cylindre (1').

9. Cylindre selon la revendication 8, caractérisé en ce qu'il comporte une installation pour exercer une force (60) par laquelle l'anneau massique (70) peut être pressé par les éléments de friction (73) contre une paroi radiale voisine (66, 67) du carter (53).

10. Cylindre selon la revendication 9, caractérisé en ce qu'il comporte deux anneaux massiques (70, 70) séparés suivant un plan radial et qui peuvent être écartés axialement par l'installation exerçant une force (60) et dont les deux faces frontales situées axialement à l'extérieur s'appuient contre les éléments de friction (73), s'appuyant eux-mêmes, contre les parois radiales voisines (66, 67) du carter (53).

11. Cylindre selon la revendication 9 ou 10, caractérisé en ce que la force de l'installation exerçant une force (60) est réglable.

12. Cylindre selon la revendication 11, caractérisé en ce que l'installation exerçant une force (60) est commandée par un fluide et la pression du fluide se règle par l'installation de réglage.

13. Cylindre selon la revendication 12, caractérisé par un dispositif à capteur pour déterminer l'amplitude des oscillations du cylindre (10, 20, 30), capteur dont les signaux sont fournis à l'installation de commande pour commander l'action de l'installation d'amortissement (50) en fonction des amplitudes détectées des oscillations.

14. Cylindre selon l'une des revendications 10 à 13, caractérisé en ce que l'installation qui exerce une force (60) comprend des rainures périphériques (33), opposées, réalisées au niveau du plan radial dans les faces frontales (71) des anneaux massiques (70), en regard axialement à faible distance, ainsi un anneau tubulaire (34), élastique, venant dans les deux rainures (33, 33) et qui peut être rempli du fluide par l'intermédiaire d'une conduite d'alimentation (40).

**Claims**

1. Roller (10) for the pressure treatment of web-shaped materials, in particular a hydraulically internally supported roller for use in the wet section of a paper-making machine, with a device for damping vibrations in the bending mode which arise when the roller rotates, characterised in that the damping device (50) is secured as a self-contained structural unit to the outwardly projecting portion (B) of the spigot or journal (1') (with the roller body integral with, or rigidly connected to, the actual journal rotating with it or the end of the non-rotating transverse beam projecting from the hollow roller of an hydraulically internally supported roller).

2. Roller according to claim 1 characterised in that the damping device (50) has an opening (56) by means of which it can be slid onto the projecting portion (B) of the spigot (1') in an axial direction and secured there free of radial play.

3. Roller according to claim 1 or 2 characterised in that the damping device (50) is a friction damping device.

4. Roller according to claim 3 characterised in that the friction damping device comprises an inertia mass which is radially movable with respect to the portion (B) of the spigot (1') and is normally held in a mean position with respect to the portion (B) of the spigot (1').

5. Roller according to claim 4 characterised in that the inertia mass is formed by at least one inertia ring (70) surrounding the portion (B) of the spigot (1').

6. Roller according to claim 5 characterised in that the inertia ring (70) is retained in a position concentric with respect to the spigot (1') by retaining elements (74) which yield resiliently in a radial direction and are distributed around the periphery.

7. Roller according to one of claims 4 to 6 characterised in that friction elements (73) are arranged on at least one axial face of the inertia ring (70).

8. Roller according to one of claims 5 to 7 characterised in that the inertia ring (70) is arranged to be radially movable in a housing (53) which forms a self-contained structural unit with the inertia ring (70) and as such is secured to the portion (B) of the spigot (1').

9. Roller according to claim 8 characterised in that a force-exerting device (60) is provided, by means of which the inertia ring (70) can be urged through the friction element (73) against an adjacent radial wall (66, 67) of the housing (53).

10. Roller according to claim 8 characterised in that two inertia rings (70, 70) are provided, separated in a radial plane and capable of being urged axially apart by the force-exerting device (60), and which at the two outer axial faces engage against friction elements (73, 73) which abut against the adjacent radial walls (66, 67) of the housing (53).

11. Roller according to claim 9 or 10 characterised in that the force of the force-exerting device (60) is adjustable.

12. Roller according to claim 11 characterised in that the force-exerting device (60) is actuable by a fluid medium and is adjustable by means of a device for controlling the pressure of the fluid medium.

13. Roller according to claim 12 characterised in that a sensing device is provided for determining the amplitude of the vibrations of the roller (10, 20, 30) the signals from the sensing device being passed to the control device with the aim of controlling the effect of the damping device (50) in accordance with the observed amplitudes of vibration.

14. Roller according to one of claims 10 to 13 characterised in that the force-exerting device (60) comprises mutually opposed circumferential grooves (33) in the mutually opposed axial faces (71) of the inertia rings (70) spaced apart by a small distance in the region of the radial plane, and an elastic tubular ring (34) engaging in the two grooves (33, 33) and capable of being filled with the fluid medium through a feed pipe (40).

Fig.1

Fig. 2

Fig. 3

Fig. 4

Fig. 5

Fig. 7

Fig. 6